# EUROPEAN PATENT APPLICATION

(11) **EP 4 372 567 A1**
(43) Date of publication of application: **22.05.2024**
(21) Application number: 22306702.6
(22) Date of filing: 18.11.2022
(51) Int. Cl.: G06F 12/14, G06F 21/60, G06F 21/78

(54) **PROCESSOR AND METHOD FOR MODIFYING PROCESSOR BEHAVIOR BASED ON MEMORY ATTRIBUTES AND INSTRUCTION TYPE**

(71) Applicant: THALES DIS FRANCE SAS, 92190 Meudon (FR)
(72) Inventor: SINTZOFF, André, 92190 Meudon (FR); COULON, Jean Roch, 92190 Meudon (FR); CHAUVON, Guillaume, 92190 Meudon (FR)
(74) Representative: Bricks, Amélie

(57) **Abstract**

A central processing unit and method for modifying its behavior and controlling access to a memory (120) having a plurality of memory locations for storing data values can include address range storage (170) for storing information identifying address ranges for a plurality of regions within the memory, and attribute storage (185) for storing, for each region, attributes where the attributes are linked to security, safety, or functionality during a program execution. The central processing unit further includes configuration logic (150) for configuring addresses and attribute of memory regions during the program execution and one or more execution logic units (150) associating attributes (and optionally metadata) to data processed by the central processing unit when data is accessed by the central processing unit and modifying instruction behaviors based on an instruction type and the attributes associated with the data being processed.

## Description

### TECHNICAL FIELD

The present invention relates to a data processing apparatus and method for modifying processor behavior, and in particular to such a data processing apparatus and method that modifies processor behavior based on memory attributes and instruction type. The term 'data value' is used herein to refer to both instructions and to items or blocks of data, such as data words.

### BACKGROUND

Data stored and processed by computer systems may require different levels of protection. For example, Linux based code may require a different level of security than other operating systems. Applications also may require to differentiate data or code type to fine-tune the behavior of the processor instructions processing them in terms of security.

It is known to segment memory into a number of separate logical regions, and to specify protection attributes for each of the regions, such as whether the regions are accessible in supervisor mode only, whether the regions are cacheable, bufferable in a cache based system, etc, to control access to those memory regions. Hence, if a processor issues a memory address which falls within a particular memory region, then the protection attributes for that region can be used to determine whether the processor is entitled to access that memory address, in a static sense that does not change processor behavior. Often, but not exclusively, such protection mechanisms are used in virtual memory systems in association with virtual to physical address translation.

EP0979456 B1 by Arm Ltd published on April 14, 2004 discloses a data processing apparatus for controlling access to a memory having a plurality of memory locations for storing data values, each memory location having a corresponding address. The apparatus includes address range storage for storing information identifying address ranges for a plurality of logical regions within the memory, and attribute storage for storing, for each logical region, attributes used to control access to memory locations within said logical region.

US2014223197 A1 teaches a method and apparatus to provide cryptographic integrity checks and replay protection to protect against hardware attacks on system memory. A mode of operation for block ciphers enhances the standard XTS-AES mode of operation to perform memory encryption by extending a tweak to include a "time stamp" indicator. A tree-based replay protection scheme uses standard XTS-AES to encrypt contents of a cache line in the system memory. A Message-Authentication Code (MAC) for the cache line is encrypted using enhanced XTS-AES and a "time stamp" indicator associated with the cache line. The "time stamp indicator" is stored in a processor.

EP3326107 B1 by Intel Corp. published July 21, 2021 discloses a processor implementing techniques for supporting configurable security levels for memory address ranges. In one embodiment, the processor includes a processing core and a memory controller, operatively coupled to the processing core, to access data in an off-chip memory and a memory encryption engine (MEE) operatively coupled to the memory controller. The MEE responds to detecting a memory access operation with respect to a memory location identified by a memory address within a memory address range associated with the off-chip memory, identifies a security level indicator associated with the memory location based on a value stored on a security range register. The MEE is further used to access at least a portion of a data item associated with the memory address range of the off-chip memory in view of the security level indicator.

Nevertheless, in such existing solutions, the protection provided is not dependent on instruction type. In addition, such solutions only deal with the way the processor accesses the data. They provide a protection that is efficient only between the system memory and the processor caches. The data is not protected in the processor itself.

Therefore, there is a need of a solution protecting data with a high level of flexibility and at the same time ensuring full protection for the data, from the memory up to their processing inside the processor.

All of the subject matter discussed in the Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### SUMMARY

In some embodiments, a method of modifying central processing unit behavior includes the steps at a central processing unit of designating predetermined memory addresses or blocks of predetermined memory addresses from a memory as assigned memory regions , assigning to the assigned memory regions attributes which are linked to security, safety, or functionality, , associating the attributes to data processed by the central processing unit when data is accessed by the central processing unit, and modifying instruction behaviors based on an instruction type and the attributes associated with the data being processed by the central processing unit for the assigned memory regions. In some embodiments, the attributes assigned to memory regions are linked to security, safety, or functionality and further apply functions among integrity, confidentiality, authenticity, control flow integrity, or operand length extension.

In some embodiments of the method, if the instruction type is a LOAD instruction type, then a predetermined integrity algorithm or a confidentiality demasking is done. In embodiments, the instruction type can be one of a LOAD instruction type, a STORE instruction type, or any instruction type involving an operand.

In some embodiments, the method further includes associating metadata to data processed by the central processing unit. In some embodiments, the method further includes configuring a metadata length according to the attribute regions configured by the central processing unit.

In some embodiments, a bus, register file, and execution unit of the central processing unit supports a combination of the data and attributes bit size length. In yet other embodiments, a bus, register file, and execution unit of the central processing unit supports a combination of the data, metadata, and attributes bit size length.

In some embodiments, a data processing apparatus for controlling access to a memory having a plurality of memory locations for storing data values, each memory location having a corresponding address, the apparatus includes address range storage for storing information identifying address ranges for a plurality of memory regions or logical regions within the memory, and attribute storage for storing, for each region, attributes used to modify data processing apparatus behavior upon access to memory locations within said region where the attributes are linked to security, safety, or functionality during a program execution executing on the data processing apparatus. The apparatus further includes configuration logic for configuring addresses and attribute of memory regions during the program execution executing on the central processing unit, one or more execution logic units associating attributes to data processed by the data processing apparatus when data is accessed by the data processing apparatus and modifying instruction behaviors based on an instruction type and the attributes associated with the data being processed by the data processing apparatus. In some embodiments, the attributes assigned on the regions are linked to security, safety, or functionality and apply functions among integrity, confidentiality, authenticity, control flow integrity, or operand length extension.

### BRIEF DESCRIPTION OF THE DRAWINGS

Non-limiting and non-exhaustive embodiments are described with reference to the following drawings, wherein like labels refer to like parts throughout the various views unless otherwise specified. The sizes and relative positions of elements in the drawings are not necessarily drawn to scale. For example, the shapes of various elements are selected, enlarged, and positioned to improve drawing legibility. The particular shapes of the elements as drawn have been selected for ease of recognition in the drawings. One or more embodiments are described hereinafter with reference to the accompanying drawings in which:
FIG. 1 is a block diagram illustrating a data processing apparatus in accordance with the embodiments;
FIG. 2 is a block diagram illustrating yet another data processing apparatus in accordance with the embodiments;
FIG. 3 is a flow chart illustrating a method of modifying behavior of a data processing apparatus in accordance with the embodiments.

### DETAILED DESCRIPTION

In the following description, certain specific details are set forth in order to provide a thorough understanding of various disclosed embodiments. However, one skilled in the relevant art will recognize that embodiments may be practiced without one or more of these specific details, or with other methods, components, materials, etc. Also in these instances, well-known structures may be omitted or shown and described in reduced detail to avoid unnecessarily obscuring descriptions of the embodiments.

In order to solve the aforementioned problems of existing solutions for data protection, the invention aims to provide a way to modify CPU or core processor behavior according to memory attributes and instruction type. In some embodiments, metadata is further used in providing protection and modifying the processor behavior. The embodiments herein can be applied to any processor that require specific care to enforce security and safety.

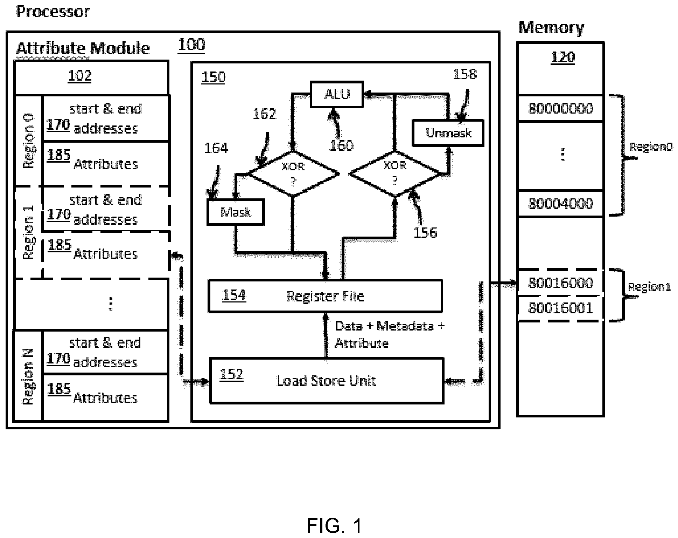

In an embodiment as illustrated in FIG. 1, a data processing apparatus 100 is shown for modifying data processing apparatus behavior and for controlling access to a memory 120 having a plurality of memory locations for storing data values, each memory location having a corresponding address. In some embodiments, the apparatus 100 includes an attribute module 102 having address range storage 170 for storing information identifying address ranges for a plurality of memory regions within the memory 120, and attribute storage 185 for storing, for each region, attributes used to modify data processor behavior upon access to memory locations within said region where the attributes are linked to security, safety, or functionality during a program execution executing on the data processing apparatus 100. The apparatus can further include an execution module 150 including configuration logic for configuring addresses and attribute of memory regions during the program execution executing on the central processing unit 100, one or more execution logic units (150 including algorithmic logic unit (ALU) 160) associating attributes to data processed by the data processing apparatus 100 when data is accessed by the data processing apparatus and modifying instruction behaviors based on an instruction type and the attributes associated with the data being processed by the data processing apparatus. In some embodiments, the attributes assigned on the regions are linked to security, safety, or functionality and apply functions among integrity, confidentiality, authenticity, control flow integrity, or operand length extension. Of course, the embodiments can include any number of other functions where it may be advantageous to modify the processor behavior based on differences in memory attributes and instruction type and optionally further on differences in metadata information.

In some embodiments, if the instruction type is a LOAD instruction using the load store unit 152 and register file 154, then a predetermined integrity algorithm can be used to check the data such as the one shown in FIG. 1.

Note, there are three types of instruction: LOAD, STORE and any instructions involving operands. Here are brief descriptions of each type and possible scenarios of how each may operate within the context of the embodiments:

LOAD (read from memory): during this instruction, the system 100 may associate attributes 185 to the data loaded in the register file 154 according to the accessed memory region, and metadata is also possibly loaded from the memory at the same time. In some embodiments, integrity check, and/or confidentiality demasking can be done. At the end of this instruction, data, attribute and metadata can be in the register 154.

STORE (write in memory): during this instruction, if attributes (185) associated to the data located in register file 154 to be written in memory is the same as the attributes of the memory region where the data will be written, data and metadata are written in memory without any transformation. If the attributes are different, before writing in memory, data and metadata can be converted according the region attributes.

Instructions with operands: depending on the attributes on the operands, the instruction behavior is modified. At the end of the instruction, data, attribute and metadata are in the register.

For operands which are not coming from a register, default attributes are given to have a common implementation of the different execution units not depending on the source.

Also note, as LOAD and STORE instructions can also have operands (registers containing the memory address to be read or written), the behavior can also be modified as for other instructions.

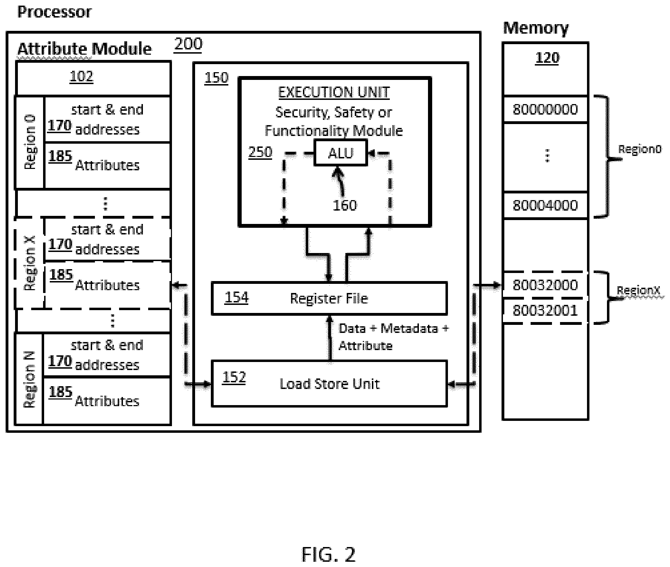

The central processing unit 100 in FIG. 1 can further include configuration logic 150 which can vary from one embodiment to the next (see FIG. 2). Operationally, in one embodiment, ALU 160, blocks 158, 164, and decision blocks 156 and 162 function as follows: if the unmask/mask operations are XOR and the ALU instruction to be performed is a XOR, no unmask/mask is required as XOR has some mathematical properties. If the instruction is a XOR then proceed without unmasking the operands and masking the result. For any other instruction, unmask operands and mask the result.

In some embodiments, the data processing apparatus further configures a metadata length according to the memory regions configured by the central processing unit. In some embodiments, the data processing apparatus further associates metadata to data processed by the central processing unit. In some embodiments, the data processing apparatus associates the attributes and the metadata to data accessed by the central processing unit.

In some embodiments, a bus, register file, and execution unit of the central processing unit supports a combination of the data and attributes bit size length. In yet some other embodiments, a bus, register file, and execution unit of the central processing unit supports a combination of the data, metadata, and attributes bit size length.

In some embodiments as illustrated in FIG. 2, a central processing unit (CPU) 200 is configured for controlling CPU behavior and access to a memory having a plurality of memory locations for storing data values, where each memory location has a corresponding address. In such embodiments, the central processing unit 200 can be very similar to the processing apparatus 100 of FIG. 1 and can include (within attribute module 102) address range storage 170 for storing information identifying address ranges for a plurality of regions within the memory, and attribute storage 185 for storing, for each memory region, attributes associated to memory locations within said region where the attributes are linked to security, safety, or functionality during a program execution executing on the central processing unit. The central processing unit 200 further includes configuration logic 150 for configuring addresses and attribute of memory regions during the program execution executing on the central processing unit and one or more execution logic units 250 associating attributes and optionally metadata to data processed by the central processing unit when data is accessed by the central processing unit and modifying instruction behaviors based on an instruction type and the attributes associated with the data being processed by the data processing apparatus. The execution logic unit(s) 250 can include one or more ALU 160 where the execution logic unit 250 would be coupled to the register file 154 and load store unit 152 as shown. Note that the processor 200 in FIG. 2 will operate according to attributes for memory region "X" as opposed to attributes for memory region "2" in processor 100 in FIG. 1. Memory region X may have different attributes than memory region 2. In some embodiment they could have the same attributes and thus the processor 200 will further consider metadata and instruction type to further modify processor behavior if needed.

In some embodiments, the attributes assigned on the regions are linked to security, safety, or functionality and apply functions among integrity, confidentiality, authenticity, control flow integrity, or operand length extension. Of course, the embodiments can include any number of other functions where it may be advantageous to modify the processor behavior based on differences in memory attributes and instruction type and optionally further on differences in metadata information. The execution logic units 250 can be modified (using algorithmic code) to appropriately modify the processor behavior based on any number of differences among the attributes associated with the data or the attributes and metadata associated with the data and/or based on the type of instruction type being executed. Although the examples of LOAD and ADD were illustrated, the embodiments are not limited to such examples and essentially any function that can be implemented by the execution logic units 250 and other elements in the processor 200 are contemplated within the scope of the claims and as further represented by FIG. 2. Execution logic unit represents any operand or function that may be performed by the processor 200 so as to provide flexibility and efficiency based on the different attributes of memory regions and instructions types it may encounter.

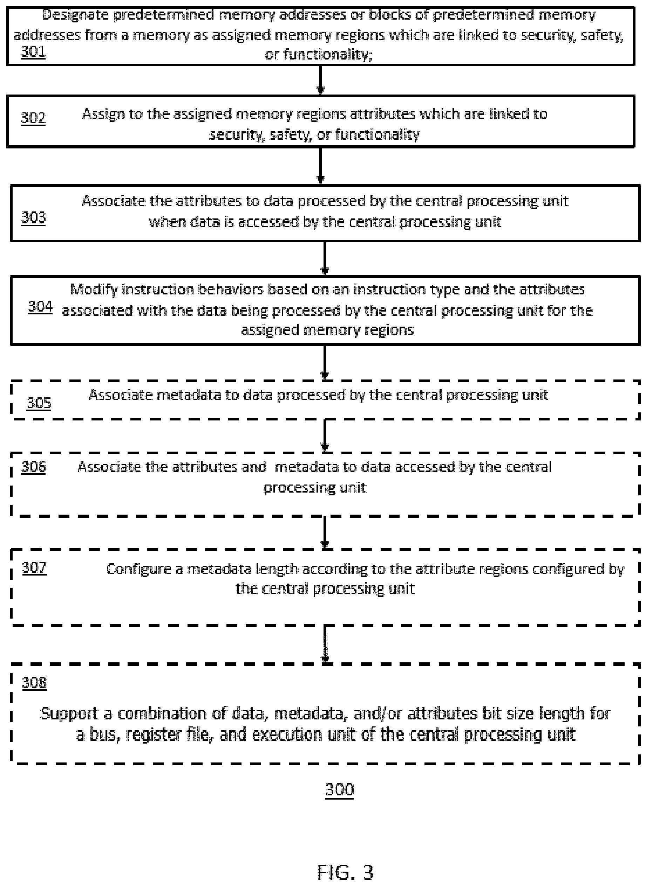

In some embodiments as further illustrated in the flow chart of FIG. 3, a method 300 of modifying central processing unit behavior includes the steps at a central processing unit (100 or 200) of designating 301 predetermined memory addresses or blocks of predetermined memory addresses from a memory as assigned memory regions, assigning to the assigned memory regions attributes 302 which are linked to security, safety, or functionality, associating at 303 the attributes to data processed by the central processing unit when data is accessed by the central processing unit, and modifying at 304 instruction behaviors based on an instruction type and the attributes associated with the data being processed by the central processing unit for the assigned memory regions. In some embodiments, the attributes assigned on memory regions are linked to security, safety, or functionality and further apply functions among integrity, confidentiality, authenticity, control flow integrity, or operand length extension. Note, the "assigned memory regions" can be a predetermined memory address or a block of predetermined memory addresses. Further note that such assigned memory regions may or may not necessarily be contiguous memory addresses in accordance with the contemplated scope of the embodiments. In other words, the assigned memory regions can be a single predetermined memory address, a predetermined block of contiguous memory addresses, a number of predetermined non-contiguous memory addresses, or a number of predetermined non-contiguous blocks of memory addresses. Further note that "predetermined" in this context can be, for example, an assignment of memory addresses in the memory 120 (see FIGs. 1 and 2) done algorithmically by the execution module 150 including an algorithm that even include a randomly generated assignment of such addresses. Such assigned memory regions have attributes assigned to them linked to security, safety, or functionality as contemplated herein.

In some embodiments, the method further includes (or optionally includes) the step 305 of associating metadata to data processed by the central processing unit.

In some embodiments, the method includes (or optionally includes) the step 306 of associating the attributes and the metadata to data accessed by the central processing unit.

In some embodiments, the method further includes the step 307 of configuring a metadata length according to the attribute regions configured by the central processing unit.

In some embodiments as illustrate by step 308, a bus, register file, and execution unit of the central processing unit supports a combination of the data and attributes bit size length or alternatively supports a combination of the data, metadata, and attributes bit size length.

In some embodiments, the instruction type can be one of a LOAD instruction type, a STORE instruction type, or any instruction involving an operand. In some embodiments, if the instruction type is a LOAD instruction type, then a predetermined integrity algorithm or a confidentiality demasking is is performed on the data.

With respect to "full protection", the embodiments described above apply security on the whole or entire data path including the memory, cache and processor. Whereas existing techniques fail to protect data in the processor itself. At the same time, it provides a flexible protection which enables to adapt the security features to both the type of data and the type of instruction processing it.

Furthermore, the embodiments can be implemented without modifying the processor toolchain, caches or memories. The embodiments allow for the use of standard memory (32bits, 64bits). Accordingly, the embodiments can provide cost reduction and technical complexity reduction in implementation. Additionally, the metadata length can be configurable according to memory region and thereby provide for silicon area reduction while providing added protection as noted.

In the absence of any specific clarification related to its express use in a particular context, where the terms " substantial " or " about " or "usually" in any grammatical form are used as modifiers in the present disclosure and any appended claims ( e.g., to modify a structure, a dimension, a measurement, or some other characteristic), it is understood that the characteristic may vary by up to 30 percent.

The terms "include" and "comprise" as well as derivatives thereof, in all of their syntactic contexts, are to be construed without limitation in an open, inclusive sense, ( e.g. , " including, but not limited to " ). The term "or," is inclusive, meaning and / or. The phrases "associated with" and "associated therewith," as well as derivatives thereof, can be understood as meaning to include, be included within, interconnect with, contain, be contained within, connect to or with, couple to or with, be communicable with, cooperate with, interleave, juxtapose, be proximate to, be bound to or with, have, have a property of, or the like.

Unless the context requires otherwise, throughout the specification and claims which follow, the word "comprise" and variations thereof, such as, "comprises" and "comprising," are to be construed in an open, inclusive sense, e.g., "including, but not limited to."

Reference throughout this specification to "one embodiment" or "an embodiment" or "some embodiments" and variations thereof mean that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

As used in this specification and the appended claims, the singular forms "a," "an," and "the" include plural referents unless the content and context clearly dictates otherwise. It should also be noted that the conjunctive terms, "and" and "or" are generally employed in the broadest sense to include "and/or" unless the content and context clearly dictates inclusivity or exclusivity as the case may be. In addition, the composition of "and" and "or" when recited herein as "and/or" is intended to encompass an embodiment that includes all of the associated items or ideas and one or more other alternative embodiments that include fewer than all of the associated items or idea .

In the present disclosure, conjunctive lists make use of a comma, which may be known as an Oxford comma, a Harvard comma, a serial comma, or another like term. Such lists are intended to connect words, clauses or sentences such that the thing following the comma is also included in the list.

As the context may require in this disclosure, except as the context may dictate otherwise, the singular shall mean the plural and vice versa. All pronouns shall mean and include the person, entity, firm or corporation to which they relate. Also, the masculine shall mean the feminine and vice versa.

When so arranged as described herein, each computing device or processor may be transformed from a generic and unspecific computing device or processor to a combination device comprising hardware and software configured for a specific and particular purpose providing more than conventional functions and solving a particular technical problem with a particular technical solution. When so arranged as described herein, to the extent that any of the inventive concepts described herein are found by a body of competent adjudication to be subsumed in an abstract idea, the ordered combination of elements and limitations are expressly presented to provide a requisite inventive concept by transforming the abstract idea into a tangible and concrete practical application of that abstract idea.

## Claims

1. A method of modifying central processing unit behavior, comprising the steps at a central processing unit of:
designating (301) predetermined memory addresses or blocks of predetermined memory addresses from a memory as assigned memory regions;
assigning to the assigned memory regions attributes (302) which are linked to security, safety, or functionality;
associating (303) the attributes to data processed by the central processing unit when data is accessed by the central processing unit; and
modifying (304) instruction behaviors based on an instruction type and the attributes associated with the data being processed by the central processing unit for the assigned memory regions.

2. The method of claim 1, wherein the attributes assigned to memory regions are linked to security, safety, or functionality and apply functions among integrity, confidentiality, authenticity, control flow integrity, or operand length extension.

3. The method of claim 1, wherein if the instruction type is of a LOAD instruction type, then a predetermined integrity algorithm or a confidentiality demasking is done.

4. The method of claim 1, wherein the instruction type is one of a LOAD instruction type, a STORE instruction type, or any instruction involving an operand.

5. The method of claim 1, wherein a bus, register file, and execution unit of the central processing unit supports a combination of the data and attributes bit size length.

6. The method of claim 1, wherein the method further comprises associating metadata to data processed by the central processing unit (305).

7. The method of claim 6, wherein the method further comprises configuring a metadata length according to the attributes assigned by the central processing unit (307).

8. The method of claim 1, wherein a bus, register file, and execution unit of the central processing unit supports a combination of the data, metadata, and attributes bit size length.

9. A data processing apparatus (100, 200) for controlling access to a memory (120) having a plurality of memory locations for storing data values, each memory location having a corresponding address, the apparatus comprising:
address range storage (170) for storing information identifying address ranges for a plurality of regions within said memory;
attribute storage (185) for storing, for each region, attributes used to modify data processing apparatus behavior upon access to memory locations within said region, wherein the attributes are linked to security, safety, or functionality during a program execution executing on the data processing apparatus;
configuration logic (150) for configuring addresses and attribute of memory regions during the program execution executing on the central processing unit (100);
one or more execution logic units (150) associating attributes to data processed by the data processing apparatus when data is accessed by the data processing apparatus and modifying instruction behaviors based on an instruction type and the attributes associated with the data being processed by the data processing apparatus.

10. The data processing apparatus of claim 9, wherein the attributes assigned on the regions are linked to security, safety, or functionality and apply functions among integrity, confidentiality, authenticity, control flow integrity, or operand length extension.
